# EUROPÄISCHE PATENTSCHRIFT

(11) **EP 1 554 151 B1**
(45) Veröffentlichungstag und Bekanntmachung des Hinweises auf die Patenterteilung: **24.04.2013**
(21) Anmeldenummer: 03775047.8
(22) Anmeldetag: 04.10.2003
(51) Int. Cl.: B60J 7/20

(54) **CABRIOLET-FAHRZEUG MIT DAS VERDECK AUFNEHMENDEN VERDECKKASTEN**
CABRIOLET VEHICLE WITH A HOOD COMPARTMENT WHICH RECEIVES THE CABRIOLET HOOD
VÉHICULE CABRIOLET COMPORTANT UN CAISSON RECEVANT LA CAPOTE

(30) Priorität: 12.10.2002 DE 10247724
(43) Veröffentlichungstag der Anmeldung: 20.07.2005
(73) Patentinhaber: Wilhelm Karmann GmbH, 49084 Osnabrück (DE)
(72) Erfinder: HABACKER, Norbert, 49565 Bramsche (DE)
(74) Vertreter: Kronthaler, Schmidt & Coll.
(86) Internationale Anmeldenummer: PCT/DE2003/003281
(87) Internationale Veröffentlichungsnummer: WO 2004/035338

(56) Entgegenhaltungen:
- DE-A- 19 912 893
- DE-C- 3 937 764
- DE-C- 19 959 700
- DE-C- 19 960 905
- DE-U- 29 801 914

## Beschreibung

Die Erfindung bezieht sich auf ein Cabriolet-Fahrzeug mit einem versenkbaren Verdeck, das in einem einen Verdeckkastendeckel aufweisenden Verdeckkasten ablegbar ist.

Bei bekannten Cabriolet-Fahrzeugen (EP 0 638 453 B1) ist zur Aufnahme des Faltverdecks ein heckseitiger Verdeckkasten vorgesehen, der durch einen Verdeckkastendeckel verschließbar ist. Dieser Verdeckkastendeckel weist zur schwenkbaren Halterung eine an der Fahrzeugkarosserie festgelegte Scharniervorrichtung auf. Deren als ein Lagerbock ausgebildetes und karosserieseitig festgelegtes Gestellteil ist mit einem den Verdeckkastendeckel tragenden Scharnierheber versehen, der durch mehrere diesen steuernde Hebel schwenkbeweglich ist. Dabei ist mittels eines zusätzlichen Zughebels eine Kippung des Scharnierhebers möglich, so daß der mit der Scharniervorrichtung verbundene Verdeckkastendeckel im Bereich seines Verbindungsteils zum Scharnierheber eine zur Ver- und Entriegelung einer Schließvorrichtung notwendige Kippung ausführen kann.

Aus der DE 199 59 700 C ist ein Cabriolet-Fahrzeug mit einem dessen Verdeck in Öffnungsstellung aufnehmenden Verdeckkasten mit einem Verdeckkastendeckel bekannt, der zur schwenkbaren Haltung zumindest eine an der Fahrzeugkarosserie festgelegte Scharniervorrichtung aufweist. Diese Scharniervorrichtung hat ein Gestellteil, das mit der Fahrzeugkarosserie verbunden ist und eine Gestellplatte zur Anbindung des Verdeckkastendeckels. An dieser Platte des Scharniers zur Festlegung des Verdeckkastendeckels ist eine Gelenkachse ausgebildet. Eine weitere Gelenkachse ist im Bereich des Gestellteils zur Anbindung des Scharniers an die Fahrzeugkarosserie vorgesehen, wobei zwischen diesen beiden Gelenkachsen ein Scharnierhebel ausgebildet ist. Dieser Scharnierhebel ist über Kolbenzylindereinheiten aus der Schließstellung in eine Aktivierungsstellung mit leicht angehobenen hinterem Bereich des Verdeckkastendeckels zu überführen, in der der Scharnierheber mittels eines Bolzens gesichert werden kann. Danach kann der Verdeckkastendeckel in seine aufgestellte Öffnungsstellung durch die Kolbenzylindereinheiten über die dem Verdeckkastendeckel benachbarte Gelenkachse des Scharniers überführt werden. In dieser aufgestellten Stellung ist der Verdeckkastendeckel nur von den Kolbenzylindereinheiten gehalten, so daß bei einem Ausfall dieser Kolbenzylindereinheiten der Verdeckkastendeckel unkontrolliert in eine geschlossene Lage schwenken kann.

Der Erfindung liegt die Aufgabe zugrunde, ein Cabriolet-Fahrzeug mit dessen Verdeckkasten abdeckendem Verdeckkastendeckel zu schaffen, dessen in Öffnungsstellung verlagerte Scharniervorrichtung mit geringem technischen Aufwand dem Verdeckkastendeckel eine gesicherte Lage vorgibt und dabei mit einer einfach aufgebauten Notentriegelung auch eine Rückbewegung des Verdeckkastendeckels in die Schließstellung unabhängig von dessen automatischem Antrieb möglich ist.

Diese Aufgabe wird durch ein Cabriolet-Fahrzeug gemäß dem Patentanspruch 1 gelöst. Hinsichtlich wesentlicher weiterer Ausgestaltungen wird auf die Ansprüche 2 bis 17 verwiesen.

Das erfindungsgemäß ausgebildete Cabriolet-Fahrzeug mit seinem Verdeckkastendeckel weist eine Scharniervorrichtung auf, die im Bereich ihres Scharnierhebers mit einer als Bewegungssperre in den Öffnungs- bzw. Schließvorgang integrierte Baugruppe versehen ist. Dabei wird der Verdeckkastendeckel mittels eines im Abstand zu dessen zumindest einer Scharniervorrichtung angreifenden Antriebssystems, beispielsweise mit einem hydraulischen Hubzylinder, verlagert, wobei die Teile der Bewegungssperre mitgeführt werden in eine Lage, die den Verdeckkastendeckel so blockieren, daß eine gesicherte Stützstellung des Verdeckkastendeckels durch diese Bewegungssperre gewährleistet ist.

Diese Bewegungssperre ist dabei so ausgelegt, daß im Bereich der Scharniervorrichtung durch aneinanderliegende Stützelemente eine Klemmwirkung erreicht wird, mit der ein Bewegen der Teile blockiert ist. Damit wird insbesondere in einer nahezu senkrechten Öffnungsstellung des Verdeckkastendeckels eine Rückschwenkung verhindert und ein durch dessen Gewicht bestimmtes Rückschwenkmoment mittels der in Klemmstellung befindlichen Bauteile insbesondere reib- und/oder formschlüssig aufgenommen.

Für eine Rückbewegung des Verdeckkastendeckels aus dieser gesicherten Öffnungs- bzw. Hochstellung wirken das Hubantriebssystem und eine der Bewegung zugeordnete Steuervorrichtung zusammen. Dabei ist es so, daß zunächst die Blockade der Bewegungssperre aufgehoben wird, wovor die eigentliche Rückschwenkbewegung des Verdeckkastendeckels einzuleiten ist. Die Bewegungssperre und die zugeordnete Steuervorrichtung wirken dabei derart zusammen, daß in einer ersten Bewegungsphase nur eine Schwenkung des Verdeckkastendeckels im Bereich seines Verbindungsteils mit dem Scharnierheber erfolgt, am Ende dieser ersten Bewegungsphase die Teile der Bewegungssperre entriegelt sind und danach die gemeinsame Rückschwenkschließbewegung von Verdeckkastendeckel und Scharnierheber eingeleitet wird.

Mit der Bewegungssperre und der dieser zugeordneten Steuervorrichtung ist eine Notbetätigung kombiniert, mittels der auch bei einem Ausfall des automatischen Antriebes des Verdeckkastendeckels ein Lösen der Bewegungssperre von Hand möglich ist. Dabei wird der Scharnierheber in seiner oberen Öffnungsstellung von Hand freigegeben und die Abwärtsbewegung des Verdeckkastendeckels kann beispielsweise durch direkten Handdruck auf die Deckeloberseite so eingeleitet werden, daß eine gleichmäßige und im Bereich der Scharniervorrichtung hinreichend gebremste Rückwärtsbewegung des Verdeckkastendeckels in die Schließstellung durchführbar ist.

Weitere Einzelheiten und vorteilhafte Ausgestaltungen der Erfindung ergeben sich aus der nachfolgenden Beschreibung und der Zeichnung, in der ein Ausführungsbeispiel des Cabriolet-Fahrzeuges mit dem durch eine Scharniervorrichtung abgestützten Verdeckkastendeckel näher veranschaulicht ist. In der Zeichnung zeigen:
- Fig. 1: eine schematische Seitenansicht eines Teils des Verdeckgestells eines Cabriolet-Fahrzeuges (ohne Dachhaut des Faltverdeck), mit einer Antriebskinematik im Bereich eines durch eine Scharniervorrichtung abgestützten Verdeckkastendeckels in Schließstellung,
- Fig. 2: eine Ausschnittsdarstellung des Verdeckkastendeckels mit der Scharniervorrichtung in Öffnungsstellung,
- Fig. 3: eine vergrößerte Einzeldarstellung der Scharniervorrichtung (ohne Verdeckkastendeckel) in Schließstellung,
- Fig. 4: eine Einzeldarstellung ähnlich Fig. 3 mit der Scharniervorrichtung in einer ersten Öffnungsphase,
- Fig. 5: eine Einzeldarstellung ähnlich Fig. 4 mit der Scharniervorrichtung in Öffnungsstellung gemäß einer Schnittdarstellung V-V in Fig. 6, und
- Fig. 6: eine perspektivische Einzeldarstellung der Scharniervorrichtung ähnlich der Öffnungsstellung gemäß Fig. 5.

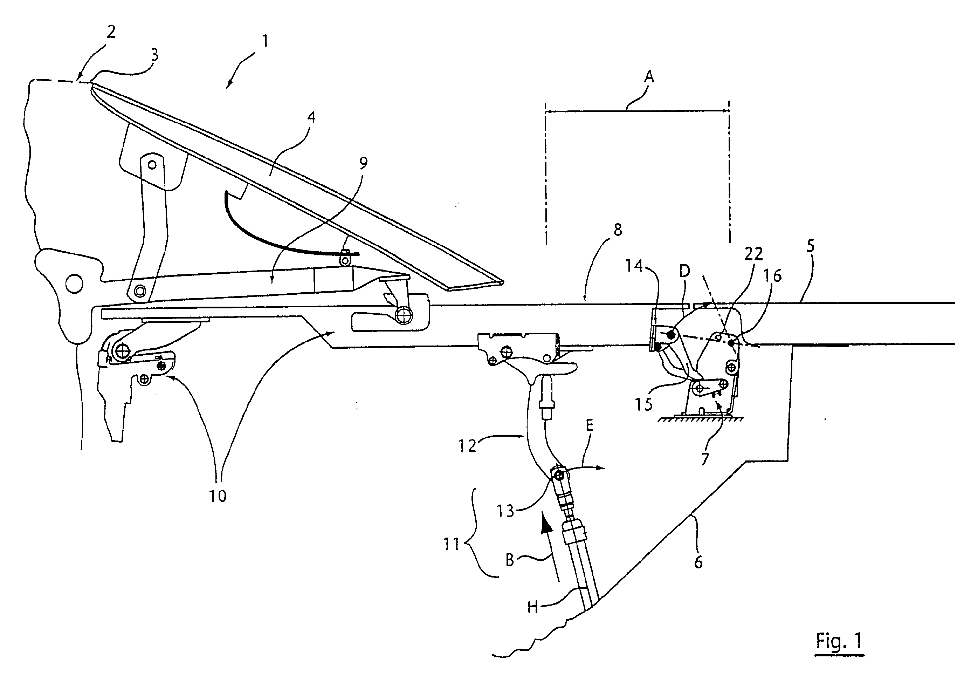

In Fig. 1 ist ein insgesamt mit 1 bezeichnetes Cabriolet-Fahrzeug ausschnittsweise in einer Prinzipdarstellung seines Heckbereichs veranschaulicht, wobei ein geschlossen dargestelltes Faltverdeck 2 eine in dessen Dachhaut 3 integrierte Heckscheibe 4 aufweist. Aus der dargestellten Schließstellung ist das Faltverdeck 2 in Öffnungsstellung (nicht dargestellt) in einen mit einem Verdeckkastendeckel 8 verschließbaren Verdeckkasten 6 ablegbar. Der im wesentlichen U-förmig in die Fahrzeugkarosserie integrierte Verdeckkastendeckel 8 verläuft in Schließstellung im wesentlichen in einer Ebene mit einem nicht näher dargestellten Kofferraumdeckel 5.

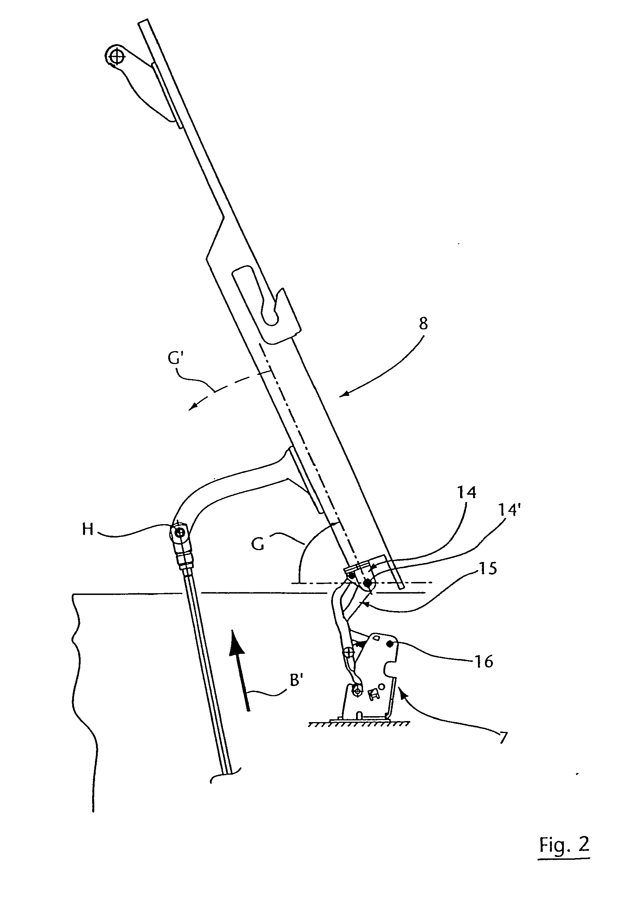

Der Verdeckkastendeckel 8 ist insbesondere durch zwei spiegelbildlich zur Fahrzeuglängsmittelebene gegenüberliegende Scharniervorrichtungen 7 bzw. 7' (die in der Seitenansicht gemäß Fig. 1 und 2 nicht sichtbar ist) an der Fahrzeugkarosserie schwenkbar abgestützt. In Fahrtrichtung nach vorn wirkt der Verdeckkastendeckel 8 mit zumindest einer im Bereich eines randseitigen Verdeckstoffspannbügels 9 vorgesehenen Schließvorrichtung 10 zusammen (Fig. 1). Aus EP 0 638 453 B1 ist bekannt, daß im Bereich derartiger Schließvorrichtungen 10 der Verdeckkastendeckel 8 mit dem Verdeckstoffspannbügel 9 durch eine Schwenk-Schub-Bewegung verriegelbar bzw. in entgegengesetzter Richtung entriegelbar ist.

Zur Realisierung dieser Bewegung im Bereich der Schließvorrichtung 10 und einer entsprechenden Öffnungs- bzw. Schließbewegung im Bereich des Verdeckkastendeckels 8 (Fig. 2) sind an diesem randseitig jeweilige Hubantriebe 11 bzw. 11' (in der Seitenansicht nicht sichtbar) vorgesehen. Der Hubantrieb 11 untergreift in einem Abstand A vor der Scharniervorrichtung 7 den Verdeckkastendeckel 8. Der Hubantrieb 11 greift dabei mit im wesentlichen vertikaler Hubachse H an einem mit dem Verdeckkastenkastendeckel 8 verbundenen Stellglied 12 im Bereich einer Gelenkverbindung 13 an.

Über diese Antriebs- und Führungseinheit aus Stellglied 12 und Scharniervorrichtung 7 kann bei einer Antriebsbewegung (Fig. 1, Pfeil B) eine Schwenkbewegung E des Hubantriebes 11 im Bereich des Stellgliedes 12 erfolgen, diese Bewegung auf den Verdeckkastendeckel 8 übertragen werden und derart gleichzeitig im Bereich der Scharniervorrichtung 7 eine Verlagerung der Baueinheit gemäß Pfeil D erfolgen. Bei einer Fortsetzung der Antriebsbewegung (Pfeil B', Fig. 2) wird der Verdeckkastendeckel 8 bis in seine obere, nahezu senkrechte Stellung hochgeschwenkt (Pfeil G, Fig. 2).

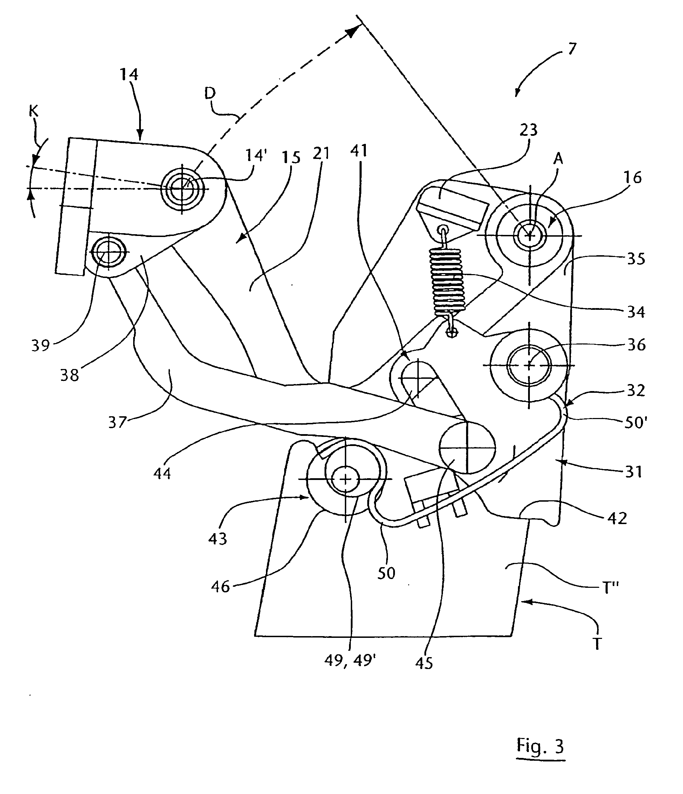

Der mit der Scharniervorrichtung 7 verbundene Verdeckkastendeckel 8 ist dabei im Bereich eines ein Gelenk 14' aufweisenden Verbindungsteil 14 an einem als Tragteil vorgesehenen Scharnierheber 15 angelenkt (Fig. 3), der andererseits im Bereich einer ein erstes Gelenk 16 aufweisenden Schwenkabstützung am Gestellteil T der Scharniervorrichtung 7 abgestützt ist.

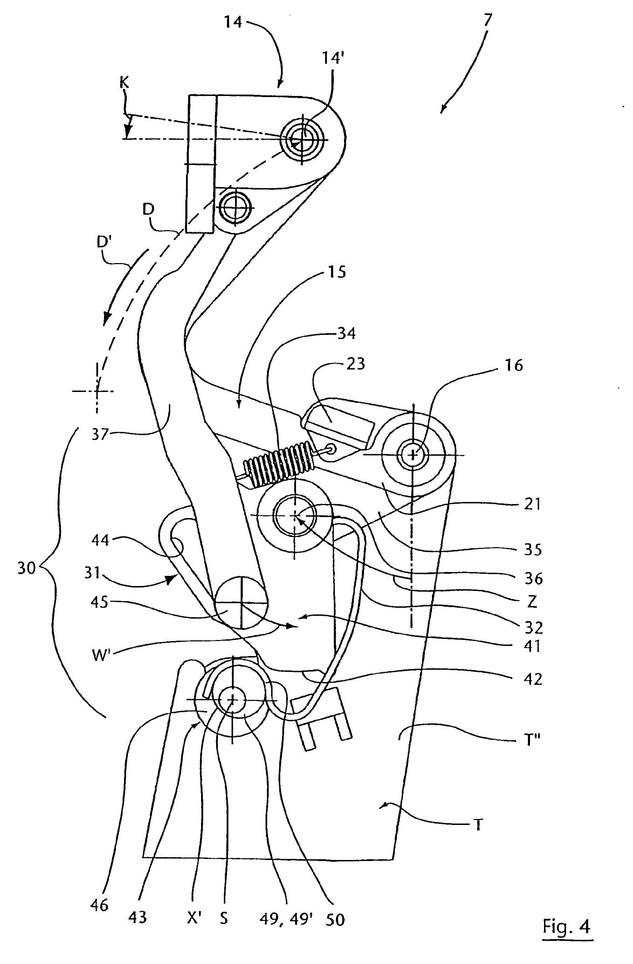

Mit einem Pfeil K ist in Fig. 4 zusätzlich verdeutlicht, daß der Verbindungsteil 14 relativ zum Scharnierheber 15 verschwenkbar ist, so daß damit der Verdeckkastendeckel 8 insbesondere in der ersten Phase (Fig. 3 zu Fig. 4) beim Öffnungsvorgang (bzw. in umgekehrter Folge in der Endphase beim Schließen des Verdeckkastendeckels) eine an der vorderen Schließvorrichtung 10 (Fig. 1) wirksame Kippung erfahren kann.

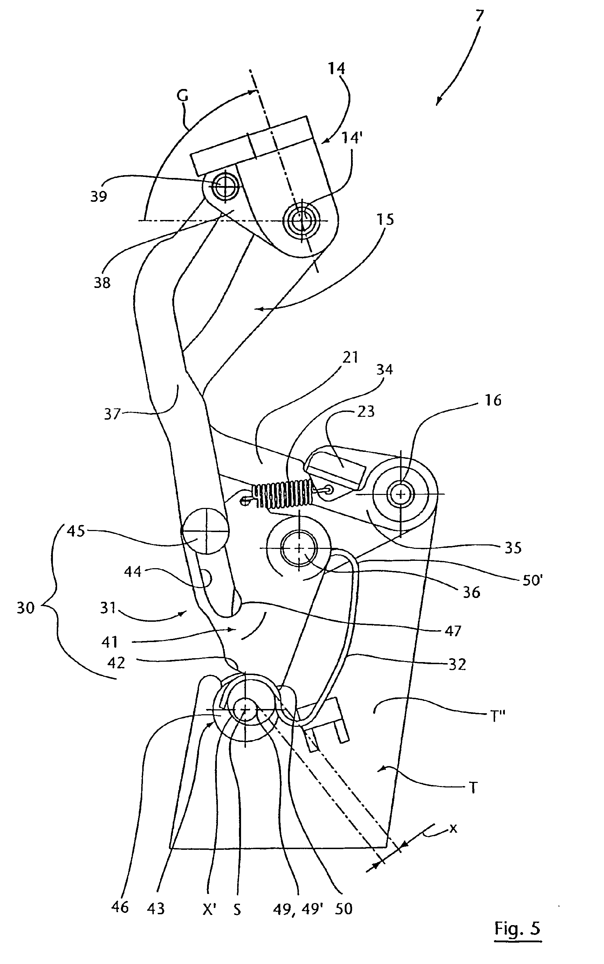

In den Darstellungen gemäß Fig. 3 bis 6 ist die Scharniervorrichtung 7 in jeweiliger Einzeldarstellung näher veranschaulicht, wobei diese in erfindungsgemäßer Ausführung im Nahbereich des Scharnierhebers 15 eine zwischen dem Verbindungsteil 14 und dem Gestellteil T wirksame, insgesamt mit 30 bezeichnete Bewegungssperre aufweist (Fig. 5: Sperrstellung). Diese Bewegungssperre 30 ist beim Öffnen des Verdeckkastendeckels 8 in eine dessen Zurückbewegung (Pfeil D in Fig. 4) im Bereich des Scharnierhebers 15 entgegenwirkende Haltestellung verlagerbar und zum Schließen des Verdeckkastendeckels 8 ist die Bewegungssperre 30 lösbar, so daß eine in der Scharniervorrichtung 7 gesteuerte Rückbewegung des Scharnierhebers 15 mit dem Deckel 8 erreicht ist.

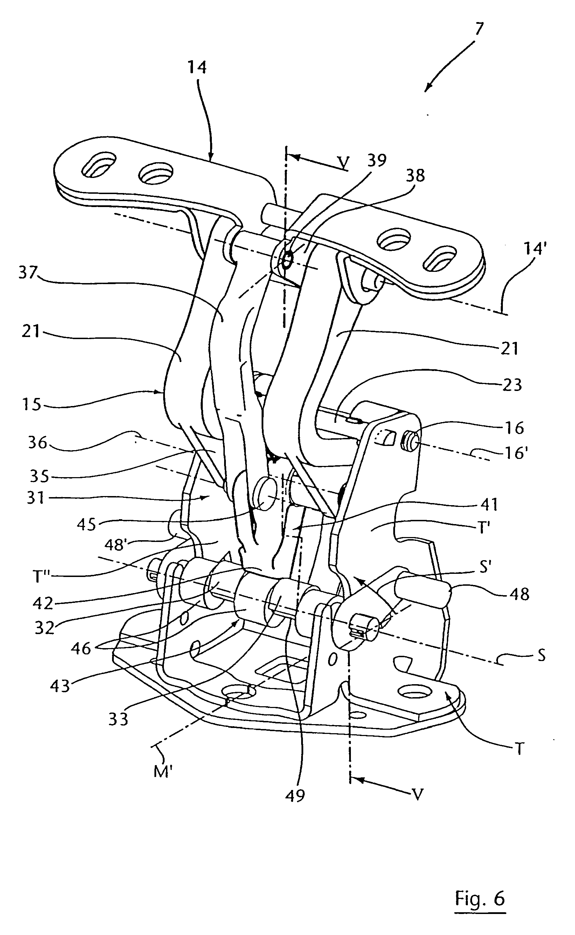

Die Bewegungssperre 30 wirkt dabei mit einer gestellseitig nur am Scharnierheber 15 im Bereich einer Querachse 36 an diesem angelenkten Steuervorrichtung 31 zusammen, so daß die bei der Verlagerung des Verdeckkastendeckels 8 bzw. des Scharnierhebers 15 wirksamen Bewegungsphasen positionsgenau auf die Teile der Bewegungssperre 30 übertragen werden und diese insbesondere in einer Klemmstellung (Fig. 5, Fig. 6) verriegelbar ist.

Die in ihrer Reihenfolge den Öffnungsvorgang zeigenden Bewegungsschaubilder gemäß Fig. 3 bis 5 verdeutlichen, daß der am Gestellteil T im Bereich des Gelenkes 16 abgestützte Scharnierheber 15 bei dem durch den Hubantrieb 11 am Verdeckkastendeckel 8 eingeleiteten Öffnungsvorgang (Pfeil D) zu einem gestellfesten Anschlag 23 hin verschwenkbar wird. In einer Schwenkrichtung Z werden dabei auch die Teile der Steuervorrichtung 31 verlagert. Danach wird bei in Anlagestellung befindlichem Scharnierheber 15 (Fig. 4) der am Teil 14 befindlichen Verdeckkastendeckel 8 weiter verschwenkt (Fig. 5, Pfeil G) und dabei werden die mittels der Steuervorrichtung 31 geführten Teile der Bewegungssperre 30 bis in eine Blockadestellung verlagert (Übergangsphase Fig. 4 zu Fig. 5).

Sämtliche der vorbeschriebenen Bewegungen im Bereich der Scharniervorrichtung 7 bzw. der Bewegungssperre 30 werden mittels des Hubantriebes 11 automatisch initiiert und durch die beschriebenen Gelenkverbindungen und Hebelteile gesteuert. Die Scharniervorrichtung 7 ist dabei zur Stabilisierung des Systems im Bereich des Scharnierhebers 15 mit die jeweilige Bewegung der Steuerbaugruppe 31 und/oder des Verdeckkastendeckels 8 unterstützenden Federbaugruppen versehen, die zwei Blattfedern 32 und 33 bzw. eine Zugfeder 34 aufweisen.

Die aus den Teilbewegungsbahnen D und G zusammengesetzte Verlagerung des Verdeckkastendeckels 8 bzw. des Verbindungsteils 14 wird im Bereich der Scharniervorrichtung 7 dadurch gesteuert, daß der Scharnierheber 15 als ein im wesentlichen L-förmiger Schwenkhebel 21 ausgebildet ist. Der L-Schwenkhebel 21 ist einerseits durch das Verbindungsteil 14 gelenkig mit dem Verdeckkastendeckel 8 verbunden, andererseits am karosseriefesten Scharniergestell T durch die Gelenkverbindung 16 abgestützt und zwischen diesen beiden Gelenken 14' und 16 ist am L-Schwenkhebel 21 ein Ansatzteil 35 (Fig. 6) vorgesehen, an dem im Bereich einer Querachse 36 eine zum Verbindungsteil 14 nach oben geführte Steuervorrichtung 31 angelenkt ist.

Die Perspektivdarstellung gemäß Fig. 6 macht deutlich, daß die Scharniervorrichtung 7 im wesentlichen spiegelbildlich zu ihrer Mittellängsebene M' aufgebaut und mit zwei der L-Schwenkhebel 21 und 21' versehen ist, die im Bereich der ersten Gelenkverbindung 16 eine gemeinsame Schwenkachse 16' am Gestellteil T aufweisen. Damit ist die Steuervorrichtung 31 vorteilhaft zwischen den beiden L-förmigen Schwenkhebeln 21 und 21' mit ihrer Querachse 36 abgestützt und von dieser ausgehend ist ein mittig verlaufender Steuerhebel 37 anderenends durch einen Ansatzteil 38 am schwenkbaren Verbindungsteil 14 durch ein Gelenk 39 schwenkbar gehalten.

Die geschnittene Seitenansicht gemäß Fig. 5 (auch Fig. 3 und 4 entsprechen dieser Schnittdarstellung von Fig. 6) zeigt den Aufbau der zur Bewegungssperre 30 verwendeten Steuervorrichtung 31, wobei diese im Bereich ihrer Querachse 36 eine schwenkbare Steuerscheibe 41 aufweist, die andererseits mit dem die Bewegung des Verdeckkastendeckels 8 vom Verbindungsteil 14 übernehmenden Steuerhebel 37 verbunden ist und nahe diesem Verbindungsbereich mit einem Klemmprofilteil 42 versehen ist. Das Klemmprofilteil 42 ist zu einem gestellseitig ortsfesten Gegenglied in Form einer Anlagewelle 43 hin verlagerbar, mit dem in der Anlagestellung (Fig. 5) eine Klemmverbindung so aufgebaut ist, daß die Teile 42 und 43 eine Weiterbewegung blockieren.

Zu der in den Bewegungsphasen gemäß Fig. 3 bis 5 verdeutlichten Steuerung dieser Teile ist der Steuerhebel 37 der Steuervorrichtung 31 in einem Langloch 44 der Steuerscheibe 41 mittels eines Gelenkbolzens 45 geführt. Die Steuerscheibe 41 ist dabei mittels der oberhalb des Langloches 44 angreifenden Zugfeder 34 in einer permanenten Sollage am Steuerhebel 37 solange gehalten, bis die Bewegungssperre wirksam ist. Gleichzeitig sind die Teile zueinander sowie gestellseitig im Bereich der Scharniervorrichtung 7 dadurch gegeneinander verspannt, daß zwischen der Steuervorrichtung 31 und den beiden Scharnierhebern 21, 21' die beiden sich zwischen der oberen Querachse 38 und der unteren Anlagewelle 43 erstreckende Blattfedern 31, 33 mit ihren doppelt bogenförmig gekrümmten Enden 50, 50' an der Anlagewelle 43 bzw. der Querachse 36 angelegt sind. Damit wird die Anlagewelle 43 durch Federkraft in ihrer den Klemmprofilteil 42 im Bereich eines zylindrischen Anlagenockens 46 untergreifenden Gebrauchsstellung zwischen den Schenkeln T' und T" des Gestellteils T gehalten.

In der oberen Schwenkstellung des Verdeckkastendeckels 8 (Fig. 5, Fig. 6) bilden die zwischen dem zylindrischen Anlagenocken 46 der Anlagewelle 43 und dem Klemmprofilteil 42 erzeugten Anlagebedingungen eine Brems-, Sperr- bzw. Totpunktstellung. Die Steuerscheibe 41 ist mit dem Klemmprofilteil 42 auf der Anlagewelle 43 abgestützt, so daß die Stützkraft über die Querachse 36 auf die beiden L-Schwenkhebel 21, 21' übertragen und deren Rückschwenkung um die Schwenkachse 16' blockiert ist.

Diese Blockierung kann ausgehend von Fig. 5 mittels des Hubantriebes 11 in umgekehrtem Bewegungsablauf (entsprechend Fig. 4 und 3) beim automatischen Schließvorgang dadurch entriegelt werden, daß der sich zurückbewegende Steuerhebel 37 (Pfeil Z', Fig. 5) im Langloch 44 am unteren Bereich 47 zur Anlage gelangt. Danach wird die Klemmkraft der Steuerscheibe 41 am zylindrischen Anlagenocken 46 der Anlagewelle 43 mittels des Steuerhebels 37 dadurch gelöst, daß dieser die Steuerscheibe 41 in einer Pfeilrichtung W' verlagert (Fig. 4). Die Schließbewegung des Verdeckkastendeckels 8 wird nun entgegen den in Fig. 3 dargestellten Öffnungsbewegungen (Pfeil D, K) fortgesetzt und der Verdeckkastendeckel 8 kann im Bereich der Schließvorrichtung 10 verriegelt werden.

Die Scharniervorrichtung 7 ist im Bereich der Bewegungssperre 30 mit einer Notentriegelung versehen, die in der darstellten Ausführung im Bereich der Anlagewelle 43 vorgesehen ist. Als Notentriegelung ist an der Anlagewelle 43 (Fig. 6) zumindest ein diese entgegen der Spannkraft der Blattfedern 31, 33 schwenkender Handhebel 48 (bzw. andererseits 48') vorgesehen. Diese Möglichkeit der Entriegelung (Pfeil S') wird dadurch erreicht, daß die Blattfedern 32 und 33 jeweils beidseits des zylindrischen Anlagenockens 46 für die mittlere Steuerscheibe 41 mit einem außermittig zur Längsachse S der Anlagewelle 43 verlaufenden und damit exzentrisch geformten Nockenteil 49, 49' (Fig. 5) auf der Anlagewelle 43 abgestützt sind.

Bei der in einer Schwenkrichtung S' eingeleiteten Verlagerung des Handhebels 48 werden die Blattfedern 32, 33 dadurch entlastet, daß deren durch den exzentrischen Profilteil X (Fig. 5) druckbelastete Enden 50 nach Ausführung einer 180°-Schwenkung S' nur noch auf dem mit X' bezeichneten Profilteil aufliegen und dessen geringere Höhe eine Entlastung der Federn 32 und 33 bewirkt. Damit kann der Verdeckkastendeckel 8 im Bereich der Klemmverbindung 42 und 43 die vorbeschriebene Lösebewegung gemäß einer Pfeilrichtung W ausführen, derart, daß bereits der mit Handkraft belastete Verdeckkastendeckel 8 in die Schließstellung absenkbar ist.

## Patentansprüche

1. Cabriolet-Fahrzeug, mit einem dessen Verdeck (2) in Öffnungsstellung aufnehmenden Verdeckkasten (6) mit einem Verdeckkastendeckel (8), der zur schwenkbaren Halterung zumindest eine an der Fahrzeugkarosserie festgelegte Scharniervorrichtung (7; 7') aufweist, **dadurch gekennzeichnet, dass** an deren Gestellteil (T) zumindest ein mittels eines ersten Gelenkes (16) verschwenkbarer Scharnierheber (15) vorgesehen und dieser andererseits durch ein ein zweites Gelenk (14') aufweisendes Verbindungsteil (14) am Verdeckkastendeckel (8) angelenkt ist, wobei am Scharnierhebel (15) zwischen dem Verbindungsteil (14) und dem Gestellteil (T) eine integrierte Bewegungssperre (30) vorgesehen ist, die durch die Öffnungsbewegung des Verdeckkastendeckels (8) in eine dessen Zurückbewegung entgegenwirkende Haltestellung überführbar und zum Schließen des Verdeckkastendeckels (8) lösbar ist.

2. Cabriolet-Fahrzeug nach Anspruch 1, **dadurch gekennzeichnet, daß** die Bewegungssperre (30) mit einer am Scharnierheber (15) angelenkten Steuervorrichtung (31) zusammenwirkt.

3. Cabriolet-Fahrzeug nach Anspruch 1 oder 2, **dadurch gekennzeichnet, daß** der am Gestellteil (T) abgestützte Scharnierheber (15) bei dem durch einen Hubantrieb (11) am Verdeckkastendeckel (8) eingeleiteten Öffnungsvorgang zu einem gestellfesten Anschlag (23) hin verschwenkbar (Pfeil D), bei in Anlagestellung befindlichem Scharnierheber (15) der Verdeckkastendeckel (8) weiterschwenkbar (Pfeil G) und dabei die mittels der Steuervorrichtung (31) geführte Bewegungssperre (30) bis in eine Blockadestellung verlagerbar ist.

4. Cabriolet-Fahrzeug nach einem der Ansprüche 1 bis 3, **dadurch gekennzeichnet, daß** der Verdeckkastendeckel (8) seinerseits im Bereich des Verbindungsteils (14) relativ zum Scharnierheber (15) verschwenkbar (Pfeil K) ist.

5. Cabriolet-Fahrzeug nach einem der Ansprüche 1 bis 4, **dadurch gekennzeichnet, daß** die Bewegungssperre (30) mittels des Hubantriebes (11) in eine Freigabestellung rückführbar ist.

6. Cabriolet-Fahrzeug nach einem der Ansprüche 1 bis 5, **dadurch gekennzeichnet, daß** der Scharnierheber (15) durch eine die jeweilige Bewegung des Verdeckkastendeckels (8) unterstützende Federbaugruppe (32, 33; 34) mit der Steuervorrichtung (31) bzw. dem Gestellteil (T) verbunden ist.

7. Cabriolet-Fahrzeug nach einem der Ansprüche 1 bis 6, **dadurch gekennzeichnet, daß** der Scharnierheber (15) als ein im wesentlichen L-förmiger Schwenkhebel (21; 21') ausgebildet ist, der einerseits durch das Verbindungsteil (14) gelenkig mit dem Verdeckkastendeckel (8) verbunden ist, andererseits am karosseriefesten Scharniergestell (T) die erste Gelenkverbindung (16) aufweist und zwischen diesen beiden Gelenken (14 und 16) mit einem Ansatzteil (35) versehen ist, an dem im Bereich einer Querachse (36) ein am Verbindungsteil (14) angreifender Steuerhebel (37) der Steuervorrichtung (31) angelenkt ist.

8. Cabriolet-Fahrzeug nach einem der Ansprüche 1 bis 7, **dadurch gekennzeichnet, daß** die Scharniervorrichtung (31) mit zwei oder mehreren L-Schwenkhebeln (21, 21') versehen ist, die im Bereich der ersten Gelenkverbindung (16) eine gemeinsame Schwenkachse am Gestellteil (T) aufweisen.

9. Cabriolet-Fahrzeug nach einem der Ansprüche 1 bis 8, **dadurch gekennzeichnet, daß** die Steuervorrichtung (31) zwischen den zwei L-förmigen Schwenkhebeln (21, 21') mit ihrer Querachse (36) abgestützt ist und von dieser ausgehend der Steuerhebel (37) anderenends durch einen Ansatzteil (38) am Verbindungsteil (14) gelenkig (bei 39) gehalten ist.

10. Cabriolet-Fahrzeug nach einem der Ansprüche 1 bis 9, **dadurch gekennzeichnet, daß** die Steuervorrichtung (31) im Bereich ihrer Querachse (36) eine Steuerscheibe (41) schwenkbar hält, die andererseits sowohl mit dem die Bewegung des Verdeckkastendeckels (8) vom Verbindungsteil (14) übernehmenden Steuerhebel (37) verbunden als auch mit einem Klemmprofilteil (42) versehen ist, derart, daß der Klemmprofilteil (42) zu einem gestellseitigen Anlageteil (43) hin verlagerbar ist und durch eine kraft-, form- und/oder reibschlüssige Verbindung die Bewegungssperre (30) gebildet ist.

11. Cabriolet-Fahrzeug nach einem der Ansprüche 1 bis 10, **dadurch gekennzeichnet, daß** der Steuerhebel (37) in einem Langloch (44) der Steuerscheibe (41) geführt ist.

12. Cabriolet-Fahrzeug nach einem der Ansprüche 1 bis 11, **dadurch gekennzeichnet, daß** der Steuervorrichtung (31) im Bereich des mit der Steuerscheibe (41) verlagerbaren Klemmprofilteils (42) als Gegenglied der Bewegungssperre (30) eine Anlagewelle (43) zugeordnet und diese am Gestellteil (T' und T") schwenkbar abgestützt ist.

13. Cabriolet-Fahrzeug nach einem der Ansprüche 1 bis 12, **dadurch gekennzeichnet, daß** die Steuerscheibe (41) mittels einer oberhalb des Langloches (44) angreifenden Zugfeder (34) in einer Sollage am Steuerhebel (37) gehalten ist.

14. Cabriolet-Fahrzeug nach einem der Ansprüche 1 bis 13, **dadurch gekennzeichnet, daß** zwischen Steuervorrichtung (31) und Scharnierheber (15) zwei sich zwischen der oberen Querachse (36) und der unteren Anlagewelle (43) erstreckende Blattfedern (32, 33) als Federbaugruppe vorgesehen sind, mit denen die Anlagewelle (43) in ihrer den Klemmprofilteil (42) im Bereich eines zylindrischen Anlagenockens (46) untergreifenden Gebrauchsstellung fixiert ist.

15. Cabriolet-Fahrzeug nach einem der Ansprüche 1 bis 14, **dadurch gekennzeichnet, daß** die zwischen dem zylindrischen Anlagenocken (46) der Anlagewelle (43) und dem Klemmprofilteil (42) erzeugte Brems-, Sperr- bzw. Totpunktstellung mittels einer Notentriegelung lösbar ist.

16. Cabriolet-Fahrzeug nach Anspruch 15, **dadurch gekennzeichnet, daß** als Notentriegelung an der Anlagewelle (43) ein diese entgegen (Pfeil S') der Spannkraft der Blattfedern (32, 33) schwenkender Handhebel (48) vorgesehen ist.

17. Cabriolet-Fahrzeug nach Anspruch 15 oder 16, **dadurch gekennzeichnet, daß** jeweils eine der Blattfedern (32, 33) beidseits des mittleren zylindrischen Anlagenockens (46) für die Steuerscheibe (41) mittels eines außermittig zur Längsachse (S) der Anlagewelle (43) verlaufenden und exzentrisch geformten Nockenteiles (49, 49') auf der Anlagewelle (43) abgestützt ist

## Claims

1. A convertible vehicle, which comprises a hood compartment (6) accommodating the hood (2) of the convertible vehicle in the open position of the hood (2), said hood compartment (6) comprising a hood compartment cover (8) which has at least one hinge device (7; 7') fixed to the vehicle body to support the hood compartment cover (8) in a pivoting manner, **characterised in that** the frame part (T) of said hinge device (7; 7') is provided with at least one hinge arm (15) which can be pivoted by means of a first joint (16) and is articulated, on the other hand, to the hood compartment cover (8) by a connecting part (14) comprising a second joint (14'), there being provided on the hinge arm (15), between the connecting part (14) and the frame part (T), an integrated movement blocking element (30), which is transferable by the opening movement of the hood compartment cover (8) into a supporting position opposing the return movement of the hood compartment cover (8) and is releasable in order to close the hood compartment cover (8).

2. The convertible vehicle according to claim 1, **characterised in that** the movement blocking element (30) cooperates with a control device (31) articulated to the hinge arm (15).

3. The convertible vehicle according to claim 1 or 2, **characterised in that** the hinge arm (15) supported on the frame part (T) can be pivoted (arrow D), during the opening operation initiated by a lifting drive (11) on the hood compartment cover (8), towards a stop (23) fixed to the frame, and the hood compartment cover (8) can be pivoted further (arrow G) when the hinge arm (15) is in a contact position, thus allowing the displacement of the movement blocking element (30), guided by the control device (31), into a blocking position.

4. The convertible vehicle according to any one of claims 1 to 3, **characterised in that** the hood compartment cover (8) can in turn be pivoted (arrow K), with respect to the hinge arm (15), in the area of the connecting part (14).

5. The convertible vehicle according to any one of claims 1 to 4, **characterised in that** the movement blocking element (30) can be returned into a release position by the lifting drive (11).

6. The convertible vehicle according to any one of claims 1 to 5, **characterised in that** the hinge arm (15) is connected to the control device (31) or the frame part (T), respectively, by a spring assembly (32, 33; 34) supporting the respective movement of the hood compartment cover (8).

7. The convertible vehicle according to any one of claims 1 to 6, **characterised in that** the hinge arm (15) is provided as a substantially L-shaped pivoting lever (21; 21'), said lever (21; 21') being articulated, on the one hand, to the hood compartment cover (8) via the connecting part (14) and comprising, on the other hand, the first joint (16) on the hinge frame (T), which is fixed to the vehicle body, and said lever (21; 21') being provided with an extension (35) between these two joints (14 and 16), to which a control lever (37) of the control device (31) engaging the connecting part (14) is articulated in the area of a transverse axis (36).

8. The convertible vehicle according to any one of claims 1 to 7, **characterised in that** the hinge device (31) is provided with two or more L-shaped pivoting levers (21, 21') which have a common pivoting axis on the frame part (T) in the area of the first joint (16).

9. The convertible vehicle according to any one of claims 1 to 8, **characterised in that** the control device (31) is supported between the two L-shaped pivoting levers (21, 21') along its transverse axis (36), starting from which the control lever (37) is supported at its other end by an extension (38) on the connecting part (14) in an articulated manner (at 39).

10. The convertible vehicle according to any one of claims 1 to 9, **characterised in that** the control device (31) pivotably supports a cam disk (41), in the area of its transverse axis (36), said cam disk (41) being connected at its other end with the control lever (37) receiving the movement of the hood compartment cover (8) from the connecting part (14) and being provided with a clamping profile part (42) such that the clamping profile part (42) can be displaced towards a frame-side abutment part (43) and the movement blocking element (30) is formed by a force-fit, form-fit and/or frictional connection.

11. The convertible vehicle according to any one of claims 1 to 10, **characterised in that** the control lever (37) is guided in an oblong hole (44) of the cam disk (41).

12. The convertible vehicle according to any one of claims 1 to 11, **characterised in that** an abutment shaft (43) is assigned, as a mating member of the movement blocking element (30), to the control device (31) in the area of the clamping profile part (42), which is displaceable with the cam disk (41), said abutment shaft (43) being pivotably supported on the frame part (T' and T").

13. The convertible vehicle according to any one of claims 1 to 12, **characterised in that** the cam disk (41) is held in a desired position on the control lever (37) by a tension spring (34) engaging above the oblong hole (44).

14. The convertible vehicle according to any one of claims 1 to 13, **characterised in that** two leaf springs (32, 33) extending between the upper transverse axis (36) and the lower abutment shaft (43) are provided as a spring assembly between the control device (31) and the hinge arm (15), said springs fixing the abutment shaft (43) in its position of use engaging below the clamping profile part (42) in the area of a cylindrical abutment cam (46).

15. The convertible vehicle according to any one of claims 1 to 14, **characterised in that** the braking, locking and/or dead-centre position generated between the cylindrical abutment cam (46) of the abutment shaft (43) and the clamping profile part (42) is releasable by an emergency release mechanism.

16. The convertible vehicle according to claim 15, **characterised in that** a hand lever (48) is provided as the emergency release mechanism on the abutment shaft (43), said hand lever (48) pivoting the abutment shaft (43) in the opposite direction (arrow S') of the elastic force exerted by the leaf springs (32, 33).

17. The convertible vehicle according to claim 15 or 16, **characterised in that** one leaf spring (32, 33) each is supported on the abutment shaft (43) on either side of the central cylindrical abutment cam (46) for the cam disk (41) by means of an eccentrically shaped cam part (49, 49') extending eccentrically with respect to the longitudinal axis (S) of the abutment shaft (43).

## Revendications

1. Véhicule cabriolet avec un compartiment de capote (6) recevant sa capote (2) en position d'ouverture, ledit compartiment de capote (6) comprenant un couvercle (8) qui présente au moins un dispositif charnière (7; 7') monté fixe à la carrosserie pour supporter le couvercle (8) du compartiment de capote en pivotement, **caractérisé en ce qu'**un élément de cadre (T) du dispositif charnière (7; 7') comprend au moins un bras de charnière (15) qui est pivotable au moyen d'une première articulation (16) et qui est articulé, d'autre part, sur le couvercle (8) du compartiment de capote au moyen d'un élément de liaison (14) comprenant une deuxième articulation (14'), le bras de charnière (15) présentant, entre l'élément de liaison (14) et l'élément de cadre (T), un élément de blocage de mouvement (30) intégré qui peut être guidé par le mouvement d'ouverture du couvercle (8) du compartiment de capote vers une position de maintien opposant le mouvement de retour du couvercle (8) du compartiment de capote et que l'on peut débloquer pour fermer le couvercle (8) du compartiment de capote.

2. Véhicule cabriolet selon la revendication 1, **caractérisé en ce que** l'élément de blocage de mouvement (30) coopère avec un dispositif de commande (31) articulé sur le bras de charnière (15).

3. Véhicule cabriolet selon la revendication 1 ou 2, **caractérisé en ce que** le bras de charnière (15) en appui sur l'élément de cadre (T) est pivotable (flèche D), pendant l'opération d'ouverture initiée par un entraînement de levage (11) sur le couvercle (8) du compartiment de capote, vers une butée (23) montée fixe au cadre, et le couvercle (8) du compartiment de capote est pivotable encore plus (flèche G) lorsque le bras de charnière (15) se trouve en position d'appui, permettant le déplacement de l'élément de blocage de mouvement (30), guidé par le dispositif de commande (31), vers une position de blocage.

4. Véhicule cabriolet selon l'une quelconque des revendications 1 à 3, **caractérisé en ce que** le couvercle (8) du compartiment de capote est pivotable lui-même (flèche K), par rapport au bras de charnière (15), dans la région de l'élément de liaison (14).

5. Véhicule cabriolet selon l'une quelconque des revendications 1 à 4, **caractérisé en ce que** l'élément de blocage de mouvement (30) peut être retourné par l'entraînement de levage (11) vers une position de déblocage.

6. Véhicule cabriolet selon l'une quelconque des revendications 1 à 5, **caractérisé en ce que** le bras de charnière (15) est respectivement relié au dispositif de commande (31) ou à l'élément de cadre (T) par un ensemble de ressorts (32, 33; 34) aidant à effectuer le mouvement respectif du couvercle (8) du compartiment de capote.

7. Véhicule cabriolet selon l'une quelconque des revendications 1 à 6, **caractérisé en ce que** le bras de charnière (15) est réalisé en tant que levier de pivotement (21; 21') sensiblement en forme de L, ledit levier (21; 21') étant articulé d'une part sur le couvercle (8) du compartiment de capote par l'élément de liaison (14) et comprenant d'autre part la première articulation (16) sur le cadre charnière (T) monté fixe sur la carrosserie, et ledit levier (21; 21') présentant un ajutage (35) entre ces deux articulations (14 et 16), sur lequel un levier de commande (37) du dispositif de commande (31) est articulé dans la région d'un axe transversal (36), ledit levier de commande (37) venant en prise dans l'élément de liaison (14).

8. Véhicule cabriolet selon l'une quelconque des revendications 1 à 7, **caractérisé en ce que** le dispositif charnière (31) présente au moins deux leviers de pivotement (21, 21') en forme de L ayant un axe de pivotement commun sur l'élément de cadre (T) dans la région de la première articulation (16).

9. Véhicule cabriolet selon l'une quelconque des revendications 1 à 8, **caractérisé en ce que** le dispositif de commande (31) est supporté entre les deux leviers de pivotement (21, 21') en forme de L selon son axe transversal (36), à partir duquel le levier de commande (37) est supporté à l'autre extrémité par un ajutage (38) sur l'élément de liaison (14) de manière articulée (au numéro 39).

10. Véhicule cabriolet selon l'une quelconque des revendications 1 à 9, **caractérisé en ce que** le dispositif de commande (31) maintient un disque de commande (41), dans la région de son axe transversal (36), ledit disque de commande (41) étant relié, d'autre part, avec le levier de commande (37) qui reçoit le mouvement du couvercle (8) du compartiment de capote transmis par l'élément de liaison (14), et présentant une pièce de profilé de serrage (42) de manière à pouvoir déplacer ladite pièce de profilé de serrage (42) vers un élément d'appui (43) du côté du cadre, et l'élément de blocage de mouvement (30) est réalisé par une liaison par force, par complémentarité de forme et/ou par friction.

11. Véhicule cabriolet selon l'une quelconque des revendications 1 à 10, **caractérisé en ce que** le levier de commande (37) est guidé dans un trou oblong (44) du disque de commande (41).

12. Véhicule cabriolet selon l'une quelconque des revendications 1 à 11, **caractérisé en ce qu'**un arbre d'appui (43) est associé, comme élément complémentaire de l'élément de blocage de mouvement (30), au dispositif de commande (31) dans la région de la pièce de profilé de serrage (42), qui est déplaçable avec le disque de commande (41), ledit arbre d'appui (43) étant supporté en pivotement sur l'élément de cadre (T' et T").

13. Véhicule cabriolet selon l'une quelconque des revendications 1 à 12, **caractérisé en ce que** le disque de commande (41) est supporté dans une position de consigne sur le levier de commande (37) par un ressort de traction (34) qui vient en prise au-dessus du trou oblong (44).

14. Véhicule cabriolet selon l'une quelconque des revendications 1 à 13, **caractérisé en ce que** deux ressorts à lames (32, 33), s'étendant entre l'axe transversal supérieur (36) et l'arbre d'appui inférieur (43), sont prévus en tant qu'ensemble de ressorts entre le dispositif de commande (31) et le bras de charnière (15), lesdits ressorts fixant l'arbre d'appui (43) dans sa position d'utilisation en prise au-dessous de la pièce de profilé de serrage (42) dans la région d'une came d'appui (46) cylindrique.

15. Véhicule cabriolet selon l'une quelconque des revendications 1 à 14, **caractérisé en ce que** la position de freinage, de verrouillage et/ou de point mort générée entre la came d'appui (46) cylindrique de l'arbre d'appui (43) et la pièce de profilé de serrage (42) est libérable par un déverrouillage d'urgence.

16. Véhicule cabriolet selon la revendication 15, **caractérisé en ce que** l'on prévoit un levier manuel (48) comme déverrouillage d'urgence sur l'arbre d'appui (43), ledit levier manuel (48) pivotant l'arbre d'appui (43) à l'opposée (flèche S') de la force élastique exercée par les ressorts à lames (32, 33).

17. Véhicule cabriolet selon la revendication 15 ou 16, **caractérisé en ce qu'**une ressort à lames (32, 33) respective est supportée sur l'arbre d'appui (43) sur les deux côtés de la came d'appui (46) cylindrique centrale pour le disque de commande (41) au moyen d'un élément de came (49, 49') de forme excentrique et s'étendant de manière excentrique par rapport à l'axe longitudinal (S) de l'arbre d'appui (43).
